# FASCICULE DE BREVET EUROPEEN

(11) **EP 2 982 019 B1**
(45) Date de publication et mention de la délivrance du brevet: **02.08.2017**
(21) Numéro de dépôt: 14721450.6
(22) Date de dépôt: 01.04.2014
(51) Int. Cl.: H02J 7/00, H02J 9/06, H02M 3/155

(54) **DISPOSITIF D'INTERFACE ENTRE UN SYSTÈME D'ALIMENTATION AUXILIAIRE ET UN MODULE DE GÉNÉRATION D'ÉNERGIE DANS UN VÉHICULE FERROVIAIRE**
VORRICHTUNG ZUR BILDUNG EINER SCHNITTSTELLE ZWISCHEN EINEM HILFSSTROMVERSORGUNGSSYSTEM UND ENERGIEGEWINNUNGSMODUL IN EINEM SCHIENENFAHRZEUG
DEVICE FORMING AN INTERFACE BETWEEN AN AUXILIARY POWER SUPPLY SYSTEM AND A POWER GENERATION MODULE IN A RAIL VEHICLE

(30) Priorité: 02.04.2013 FR 1352977
(43) Date de publication de la demande: 10.02.2016
(73) Titulaire: Faiveley Transport Tours, 37700 Saint Pierre des Corps (FR)
(72) Inventeur: AUBIN, Philippe, F-37390 Chanceaux Sur Choisille (FR)
(74) Mandataire: Santarelli
(86) Numéro de dépôt international: PCT/FR2014/050773
(87) Numéro de publication internationale: WO 2014/162090

(56) Documents cités:
- EP-A1- 2 204 893
- WO-A1-2013/038441
- WO-A2-2012/084281
- FR-A1- 2 919 768
- US-A1- 2005 279 242
- US-A1- 2011 163 722
- US-B2- 8 143 856

## Description

La présente invention concerne un dispositif d'interface entre un système d'alimentation auxiliaire et un module de génération d'énergie dans un véhicule ferroviaire.

Les véhicules ferroviaires électriques, comme par exemple les trains électriques, sont équipés d'un système d'alimentation auxiliaire ou batteries de secours afin d'alimenter en énergie électrique le train en cas d'absence d'alimentation au moyen du système d'alimentation principale, par exemple en cas de non disponibilité de la caténaire ou du rail d'alimentation électrique, par exemple en raison d'une panne ou d'un passage du véhicule ferroviaire dans une zone où le réseau électrique est absent.

La majorité des trains actuels sont équipés d'un type de système d'alimentation auxiliaire, ainsi que de chargeurs conçus pour charger en énergie électrique ce type de système d'alimentation auxiliaire, ce type de système d'alimentation auxiliaire étant principalement des batteries de type Ni-Cd (Nikel- Cadmium).

Ces batteries doivent être chargées afin de pouvoir alimenter en énergie électrique certains circuits électriques du train en cas de panne ou d'absence du système d'alimentation principale.

Les batteries Ni-Cd doivent être remplacées régulièrement (approximativement tous les 10 ans) à cause de leur vieillissement.

Ces batteries Ni-Cd sont aujourd'hui devenues obsolètes et d'autres types de batteries plus performantes, moins encombrantes, moins polluantes et sûres sont disponibles sur le marché.

Néanmoins, les modules de génération d'énergie ou chargeurs de batterie disponibles dans les trains actuels sont conçus pour alimenter en énergie électrique les batteries de type Ni-Cd. Ainsi, lorsque la batterie doit être remplacée, le chargeur doit être également remplacé, impliquant des frais importants.

La présente invention a pour but de permettre le remplacement du système d'alimentation auxiliaire indépendamment du module de génération d'énergie employé pour charger le système d'alimentation auxiliaire.

A cet égard, la présente invention propose selon un premier aspect, un ensemble comprenant un système d'alimentation auxiliaire et un dispositif d'interface entre le système d'alimentation auxiliaire et un module de génération d'énergie dans un véhicule ferroviaire, le module de génération d'énergie ayant été conçu pour charger en énergie électrique un système d'alimentation auxiliaire mis en oeuvre selon une technologie différente de celle du système d'alimentation auxiliaire de l'ensemble.

Selon l'invention, le dispositif d'interface comporte des moyens de connexion audit module de génération d'énergie et au système d'alimentation auxiliaire, et le dispositif d'interface comporte des moyens d'interface conçus pour le fonctionnement du système d'alimentation auxiliaire en combinaison avec ledit module de génération d'énergie, les moyens d'interface comportant des moyens de sécurité montés en parallèle dudit système d'alimentation auxiliaire.

Ainsi, le module de génération d'énergie qui est conçu pour fonctionner avec un type de système d'alimentation auxiliaire dans le véhicule ferroviaire, c'est-à-dire qui est conçu pour charger en énergie électrique un système d'alimentation auxiliaire d'un premier type, peut être maintenu lors du remplacement de ce système d'alimentation auxiliaire par un système d'alimentation auxiliaire d'un second type.

On notera qu'un type de système d'alimentation auxiliaire équivaut à un système d'alimentation auxiliaire mis en oeuvre selon une technologie, comme par exemple selon la technologie Ni-Cd, et qu'un module de génération d'énergie est associé au système d'alimentation auxiliaire afin de le charger en énergie électrique.

Les frais de remplacement du système d'alimentation auxiliaire ne sont donc pas augmentés par le remplacement additionnel du module de génération d'énergie.

En outre, lors du remplacement du système d'alimentation auxiliaire, le module de génération d'énergie est maintenu, ce que diminue le risque de dysfonctionnements dus au changement dans l'ensemble formé par le système d'alimentation auxiliaire et le module de génération d'énergie (qui fonctionnait correctement).

En effet, lorsque le module de génération d'énergie présente des défauts et qu'il ne fonctionne pas, le système d'alimentation auxiliaire, bien qu'étant chargé, ne peut pas fournir de l'énergie électrique.

Par ailleurs, les moyens de sécurité empêchent que le système d'alimentation auxiliaire se trouve en court-circuit évitant ainsi son endommagement et augmentant sa disponibilité opérationnelle.

En effet, le système d'alimentation auxiliaire pourrait se trouver en court-circuit, par exemple si le module de génération d'énergie ou le dispositif d'interface est défectueux.

Grâce à l'invention, même si le module de génération d'énergie, ou le dispositif d'interface présente des défauts, le système d'alimentation auxiliaire ne se trouverait pas en court-circuit, son endommagement étant évité.

Ceci est primordial dans le domaine ferroviaire dès lors que l'alimentation de certains circuits en cas de panne du système d'alimentation principal est indispensable à tout moment.

Selon une caractéristique, le module de génération d'énergie comportant des moyens de charge conçus pour délivrer de l'énergie, les moyens d'interface comportent des moyens de transfert de l'énergie délivrée par les moyens de charge du module de génération d'énergie vers le système d'alimentation auxiliaire.

En particulier, lors du fonctionnement du système d'alimentation auxiliaire en combinaison avec le module de génération d'énergie, les moyens d'interface comportent des moyens de transfert de l'énergie délivrée par le module de génération d'énergie vers le système d'alimentation auxiliaire.

Grâce à ces moyens, le système d'alimentation auxiliaire est chargé en énergie électrique provenant du module de génération d'énergie.

Le système d'alimentation auxiliaire chargé est ainsi prêt à alimenter en énergie électrique certaines parties du véhicule ferroviaire en cas de nécessité.

Selon une autre caractéristique, les moyens d'interface comportent en outre des moyens de transfert d'énergie électrique provenant du système d'alimentation auxiliaire vers le module de génération d'énergie.

Grâce à ces moyens, l'énergie électrique accumulée dans le système d'alimentation auxiliaire est transférée vers le système d'alimentation principale ou réseau électrique principal.

Cette énergie provenant du système d'alimentation auxiliaire sert à alimenter certains circuits électriques du véhicule ferroviaire.

Selon une caractéristique, les moyens d'interface comportent des moyens de stockage d'énergie.

Ainsi, le transfert de l'énergie électrique entre le système d'alimentation auxiliaire et le module de génération d'énergie est contrôlé.

Par exemple, l'autre type de système d'alimentation auxiliaire est une batterie de type Lithium Fer Phosphate.

Selon un second aspect, la présente invention concerne un véhicule ferroviaire comprenant un ensemble conforme à l'invention.

Ce véhicule ferroviaire présente des avantages analogues à ceux décrits précédemment en référence à l'ensemble selon l'invention.

D'autres particularités et avantages de l'invention apparaîtront encore dans la description ci-après,

On identifiera enfin ici le document US 2011/163722 A1, décrivant, pour un véhicule électrique hybride, un système d'alimentation auxiliaire et un module d'énergie conçu pour charger en énergie électrique un système d'alimentation auxiliaire. Aux dessins annexés, donnés à titre d'exemples non limitatifs :
- la figure 1 représente un dispositif d'interface conforme à l'invention disposé entre un système d'alimentation auxiliaire et un module de génération d'énergie ; et
- la figure 2 représente un mode de réalisation d'un dispositif d'interface entre un système d'alimentation auxiliaire et un module de génération d'énergie conforme à l'invention.

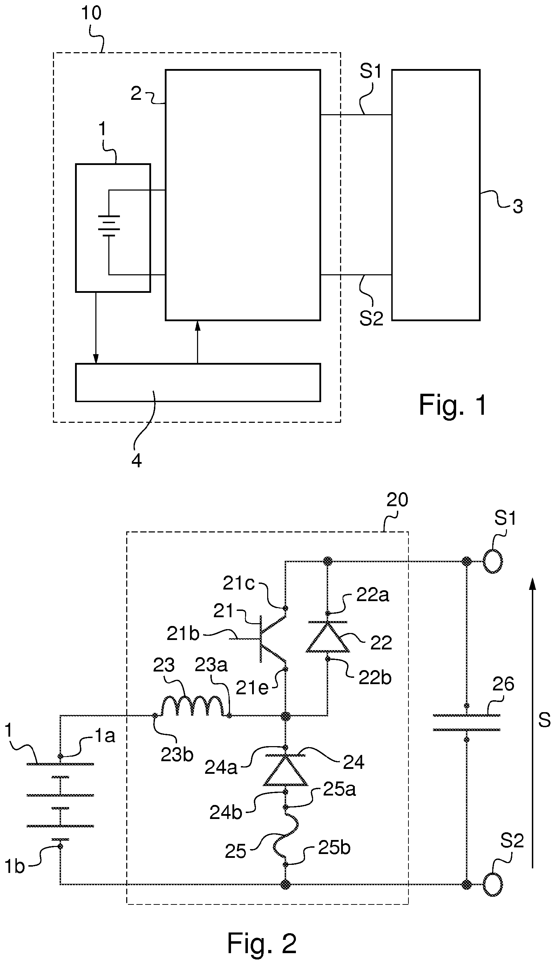

La figure 1 représente un dispositif d'interface 2 connecté à un système d'alimentation auxiliaire 1 et à un module de génération d'énergie 3.

Les véhicules ferroviaires sont alimentés en énergie électrique au moyen d'un système ou réseau d'alimentation principale (non visible sur les figures).

Des systèmes d'alimentation auxiliaires 1 sont présents dans les véhicules afin de générer de l'énergie électrique à certaines parties du véhicule en cas d'absence d'alimentation au moyen du système d'alimentation principale.

Ce système d'alimentation auxiliaire 1 est par exemple une batterie ou batterie d'accumulateurs électriques.

Cette batterie 1 est chargée en énergie électrique au moyen d'un module générateur d'énergie 3. Ce module générateur d'énergie 3 est par exemple un chargeur de batterie.

Ainsi, dans l'exemple de réalisation décrit, le système d'alimentation auxiliaire 1 est une batterie 1 et le module générateur d'énergie 3 est un chargeur de batterie 3.

On notera que bien que la batterie 1 est d'un second type, c'est-à-dire qu'elle est mise en oeuvre selon une seconde technologie, le module générateur d'énergie 3 a été conçu pour fonctionner en combinaison avec un premier type de batterie, c'est-à-dire qu'il a été conçu pour délivrer de l'énergie électrique à un premier type de batterie.

La plus part des véhicules ferroviaires actuels sont équipés de batteries de type ou technologie Ni-Cd (premier type de batterie), ainsi que de chargeurs de batterie qui ont étés conçus pour fonctionner en combinaison avec ce type de batteries.

Dans un mode de réalisation décrit, la batterie 1 (second type de batterie) est une batterie de type Lithium Fer Phosphate (LiFePO₄), connue sous le terme batterie LPF. Ces types de batterie présentent une bonne densité de puissance, une durée de vie allongée et de bons ratios entre quantité d'énergie stockée et taille par rapport à des batteries de type Ni-Cd utilisées traditionnellement.

Bien entendu, les seconds types de batteries 1 peuvent être différents, par exemple Lithium-Nickel-Cobalt-Aluminium (NCA) ou Lithium-Nickel-Manganese Cobalt (NMC).

Dans le mode de réalisation décrit, le chargeur de batterie 3 est conçu pour fonctionner en combinaison avec des batteries de type Ni-Cd.

Bien entendu, les chargeurs de batterie peuvent être conçus pour fonctionner en combinaison avec des batteries de types différents.

La batterie 1 de second type et le chargeur de batterie 3 sont reliés à travers un dispositif d'interface 2. Un mode de réalisation de ce dispositif d'interface 2 sera décrit en référence à la figure 2.

Dans la suite de ce document, le terme batterie 1 correspond à une batterie 1 du second type.

Des moyens de contrôle 4 sont aptes à gérer le fonctionnement d'un ensemble 10 formé par le dispositif d'interface 2 et la batterie 1.

En particulier, les moyens de contrôle 4 configurent le dispositif d'interface 2 de telle sorte que la batterie 1 soit en mode de charge ou de décharge, le mode de charge correspondant à un mode dans lequel la batterie 1 est chargée en énergie électrique provenant du chargeur de batterie 3, et le mode de décharge correspondant à un mode dans lequel la batterie 1 alimente en énergie électrique certaines parties du véhicule ferroviaire.

La figure 2 représente une batterie 1 et un mode de réalisation du dispositif d'interface 2 conforme à l'invention.

Le dispositif d'interface 2 comporte des moyens de connexion au chargeur de batterie 3 et aux batteries de type LFP. Dans cet exemple, les moyens de connexion sont des connecteurs électriques aptes à établir une connexion électrique entre la batterie 1 et le dispositif d'interface 2, et entre le chargeur de batterie 3 et le dispositif d'interface 2.

Le dispositif d'interface 2 comporte en outre des moyens d'interface 20 conçus pour le fonctionnement de la batterie de type LFP en combinaison avec le chargeur de batterie 3 conçu pour fonctionner en combinaison avec des batteries de type Ni-Cd.

Ainsi, des véhicules ferroviaires qui avaient été équipés avec des batteries d'un premier type, par exemple de type Ni-Cd et des chargeurs de batterie conçus pour fonctionner avec ce type de batteries, peuvent aujourd'hui être mis à jour avec des batteries d'autres types sans pour autant devoir remplacer les chargeurs de batterie.

Les moyens d'interface 20 du dispositif d'interface 2 comportent des moyens de transfert de l'énergie délivrée par le chargeur de batterie 3 vers la batterie 1.

Ces moyens de transfert de l'énergie délivrée par le chargeur de batterie 3 sont conçus pour relier électriquement la batterie 1 et le chargeur 3 de telle sorte que la batterie 1 soit chargée électriquement.

Dans ce mode de réalisation décrit, les moyens de transfert de l'énergie délivrée par le chargeur de batterie 3 comportent un transistor de charge 21.

Ce transistor de charge 21 peut être de différents types, par exemple un transistor à effet de champ (FET, acronyme de « *Field Effect Transistor* »), comme par exemple un MOSFET, JFET ou autre, ou un transistor bipolaire, ou encore un transistor hybride bipolaire et FET, comme par exemple un transistor IGBT.

Lorsque le transistor de charge 21 est commandé en fonctionnement, de l'énergie provenant du chargeur de batterie 3 est dirigée vers la batterie 1.

Les moyens d'interface 20 comportent en outre des moyens de transfert d'énergie électrique provenant de la batterie 1 vers le chargeur de batterie 3.

Ces moyens de transfert de l'énergie électrique provenant de la batterie 1 vers le chargeur de batterie 3 sont conçus pour relier électriquement la batterie 1 et le chargeur de batterie 3 de telle sorte que l'énergie électrique qui a été stockée dans la batterie 1 est transférée vers le réseau ou système d'alimentation principale du véhicule.

Dans le mode de réalisation décrit, les moyens de transfert de l'énergie électrique provenant de la batterie 1 vers le chargeur de batterie 3 comportent une diode de décharge 22.

Les moyens d'interface 20 comportent en outre des moyens de sécurité 24, 25 montés en parallèle de la batterie 1.

Dans l'exemple décrit, les moyens de sécurité comportent une diode de sécurité 24 et un fusible 25.

Ainsi, les moyens de sécurité 24, 25 évitent que la batterie 1 se trouve dans une configuration de court-circuit, ce qui endommagerait la batterie 1.

Par conséquent, les moyens de sécurité 22, 24 protègent la batterie 1 des possibles défauts dans le dispositif d'interface 2 et dans le chargeur de batterie 3 qui pourrait provoquer son endommagement.

Il est ainsi garanti, le bon fonctionnement de la batterie 1, bien que le chargeur de batterie 3 ou le dispositif d'interface 2 puissent présenter des défauts.

On notera qu'il est essentiel dans le domaine ferroviaire que la batterie 1 fournisse de l'énergie électrique à certains circuits électriques lors des pannes du système d'alimentation principale.

Les moyens d'interface 20 comportent en outre des moyens d'accumulation d'énergie. Dans cet exemple, les moyens d'accumulation d'énergie comportent une inductance 23.

Cette inductance 23 est apte à stocker l'énergie électrique provenant du chargeur de batterie 3 ou provenant de la batterie 1

Lorsque la batterie 1 se trouve en mode de charge, c'est-à-dire qu'elle est chargée par l'énergie électrique délivrée par le chargeur de batterie 3, l'inductance 23 stocke cette énergie électrique provenant du chargeur de batterie 3 et libère ensuite cette énergie vers la batterie 1.

Lorsque la batterie 1 est en mode de décharge, c'est-à-dire qu'elle alimente des parties du véhicule ferroviaire, l'inductance 23 stocke l'énergie provenant de la batterie 1 et la libère ensuite vers le chargeur de batterie 3 et le réseau d'alimentation principale.

On va décrire ensuite la topologie du dispositif d'interface 2 selon un mode de réalisation.

Le dispositif d'interface 2 décrit en référence à la figure 2 comporte un transistor de charge 21 relié par son collecteur 21 c à la cathode 22a de la diode de décharge 22, cette diode de décharge 22 étant connectée par son anode 22b à l'émetteur 22e du transistor de charge 21.

Ce transistor de charge est ici un transistor bipolaire de type NPN.

Un circuit (non illustré) de commande rapprochée (plus connu sous sa terminologie anglosaxonne « *driver* » est relié à la base 21 b du transistor de charge 21. Le driver reçoit un signal de commande provenant des moyens de commande 4 permettant la mise en état de fonctionnement ou la mise en état coupé du transistor de charge 21.

Le signal de commande peut être généré par un régulateur à modulation d'impulsions (MLI), connu en nomenclature anglosaxonne comme régulateur PWM (« *Pulse Width Modulation*»).

Ainsi, dans un exemple, l'énergie transférée vers la batterie 1 est ainsi régulée en fonction de la largeur de l'impulsion du signal de commande.

L'émetteur 21 e du transistor de charge 21 ainsi que l'anode 22b de la diode de décharge 22 sont reliés à une première borne 23a de l'inductance 23.

Cette inductance 23 est reliée par une deuxième borne 23b au pôle positif 1 a de la batterie 1.

L'anode 22b de la diode de décharge 22, la première borne 23a de l'inductance 23 et l'émetteur 21 e du transistor de charge 21 sont reliés à la cathode 24a de la diode de sécurité 24. L'anode 24b de la diode de sécurité 24 est reliée au fusible 25, ce fusible 25 étant relié en outre au pôle négatif 1 b de la batterie 1.

Ainsi, la diode de sécurité 24 et le fusible 25 sont disposés en parallèle de la batterie 1.

La cathode 22a de la diode de décharge 22, ainsi que le collecteur 21 c du transistor de charge 21 constituent la borne positive *s*1 de la sortie s du dispositif d'interface 2.

Le pôle négatif de la batterie 1, ainsi qu'une deuxième borne 25b du fusible 25 constituent la borne négative *s*2 de la sortie s du dispositif d'interface 2.

Un condensateur de sortie 26 est disposé en sortie s du dispositif d'interface 2, afin de constituer une différence de potentiel entre la borne positive *s*1 et la borne négative *s*2 de la sortie *s*.

La connexion du dispositif d'interface 2 au chargeur de batterie 3 est mise en oeuvre à travers la borne positive *s*1 et la borne négative *s*2 de la sortie du dispositif d'interface 2.

On notera ainsi que la borne positive *s*1 et la borne négative *s*2 de la sortie du dispositif d'interface constituent des moyens de connexion du dispositif d'interface 2 au chargeur de batterie 3.

On va décrire ensuite le fonctionnement du dispositif d'interface 2 décrit ci-dessus.

Lorsque la batterie 1 est en mode de charge, c'est-à-dire lorsqu'elle est chargée en énergie électrique par le chargeur de batterie 3, le transistor de charge 21 est mis dans un mode passant ou mode de fonctionnement, et la diode de décharge 22 ainsi que la diode de sécurité 24 ne sont pas en conduction.

La diode de sécurité 24 n'étant pas en conduction, elle n'a aucune influence sur le fonctionnement en mode de charge de la batterie 1.

Ainsi, un courant de charge (non représenté sur la figure) circule du chargeur de batterie 3 vers l'inductance 23, l'énergie électrique délivrée par le chargeur de batterie 3 étant stockée dans l'inductance 23.

Cette énergie électrique stockée dans l'inductance 23 est transférée à la batterie 1 qui se charge jusqu'à sa charge complète.

Grâce à la présence de cette inductance 26, le courant de charge circulant du chargeur de batterie 3 à la batterie 1 est maitrisé.

Cette inductance est dimensionnée de telle sorte qu'elle soit apte à supporter le passage du courant du chargeur de batterie 3 vers la batterie 1 en mode de charge.

Lorsque la batterie 1 est en mode de décharge, c'est-à-dire qu'elle doit alimenter certaines parties du véhicule ferroviaire, le transistor de charge 21 est mis en mode coupé.

La diode de décharge 22 est en conduction, et un courant de décharge (non représenté sur la figure) provenant de la batterie 1 et de l'inductance 23 traverse la diode de décharge 22 pour arriver au réseau principal d'alimentation.

Comme pour le cas dans lequel la batterie 1 est en mode de charge, la diode de sécurité 24 n'étant pas en conduction, n'a aucune influence sur le fonctionnement en mode de décharge de la batterie 1.

On notera que le chargeur de batterie 3 est unidirectionnel, c'est-à-dire qu'il peut transmettre de l'énergie mais il ne consomme pas d'énergie.

Comme dans le cas de la charge de la batterie 1, lorsque du courant de décharge flue de la batterie 1 vers le chargeur de batterie 3, de l'énergie électrique est stockée par l'inductance 23, cette inductance 23 libérant ensuite l'énergie électrique afin d'alimenter des circuits électriques qui en temps normal sont alimentés par le réseau principal d'alimentation.

On notera que lorsque la batterie 1 est en mode de décharge, l'inductance peut fonctionner en saturation.

La diode de sécurité 24, ainsi que le fusible 25 sont disposés en parallèle de la batterie 1 afin de la protéger d'un possible court-circuit.

Ainsi, lorsque la diode doit être en état de non conduction et qu'elle se trouve en état de conduction, le fusible 25 est détruit par le courant circulant à travers la diode, ce qui empêche le court-circuit de la batterie 1.

Grâce à l'invention, les batteries présentes dans les véhicules ferroviaires, en particulier des batteries de type Ni-Cd, peuvent être remplacées par des batteries d'autre type, en particulier par des batteries de type LFP, sans remplacer le chargeur de batterie.

Ainsi, les frais de remplacement d'une batterie obsolète par une batterie plus performante et sure ne sont pas incrémentés par le remplacement du chargeur de batterie.

Par ailleurs, le dispositif d'interface conforme à l'invention pourrait être installé dans des véhicules autres que des véhicules ferroviaires.

## Revendications

1. Ensemble comprenant un système d'alimentation auxiliaire (1) et un dispositif d'interface (2) entre ledit système d'alimentation auxiliaire (1) et un module de génération d'énergie (3) dans un véhicule ferroviaire, ledit module de génération d'énergie (3) ayant été conçu pour charger en énergie électrique un système d'alimentation auxiliaire mis en oeuvre selon une technologie différente de celle dudit système d'alimentation auxiliaire (1) dudit ensemble, ledit ensemble étant **caractérisé en ce que** ledit dispositif d'interface (2) comporte des moyens de connexion audit module de génération d'énergie (3) et audit système d'alimentation auxiliaire (1), et **en ce que** le dispositif d'interface (2) comporte des moyens d'interface (20) conçus pour le fonctionnement dudit système d'alimentation auxiliaire (1) en combinaison avec ledit module de génération d'énergie (3), les moyens d'interface (20) comportant des moyens de sécurité (24, 25) montés en parallèle dudit système d'alimentation auxiliaire (1).

2. Ensemble conforme à la revendication 1, **caractérisé en ce que**, le module de génération d'énergie (3) comportant des moyens de charge conçus pour délivrer de l'énergie, lesdits moyens d'interface (20) comportent des moyens de transfert (21) de l'énergie électrique délivrée par les moyens de charge dudit module de génération d'énergie (3) vers ledit système d'alimentation auxiliaire (1).

3. Ensemble conforme à l'une des revendications 1 ou 2, **caractérisé en ce que** lesdits moyens d'interface (20) comportent en outre des moyens de transfert d'énergie électrique (22) provenant dudit système d'alimentation auxiliaire (1) vers le module de génération d'énergie (3).

4. Ensemble conforme à l'une des revendications 1 à 3, **caractérisé en ce que** les moyens d'interface (20) comportent des moyens de stockage d'énergie (23).

5. Ensemble conforme à l'une des revendications 1 à 4, **caractérisé en ce que** ledit système d'alimentation auxiliaire (1) est une batterie de type Lithium Fer Phosphate.

6. Véhicule ferroviaire comprenant un ensemble conforme à l'une des revendications 1 à 5.

7. Procédé de maintenance dans un véhicule ferroviaire, le véhicule ferroviaire comportant un système d'alimentation auxiliaire mis en oeuvre selon une première technologie et un module de génération d'énergie (3), ledit module de génération d'énergie (3) étant conçu pour charger en énergie électrique ledit système d'alimentation auxiliaire, ledit procédé de maintenance étant **caractérisé en ce qu'**il comporte le remplacement dudit système d'alimentation auxiliaire par un ensemble formé par un système d'alimentation auxiliaire (1) mis en oeuvre selon une seconde technologie différente de la première technologie et un dispositif d'interface (2), ledit dispositif d'interface (2) étant disposé entre ledit système d'alimentation auxiliaire (1) dudit ensemble et ledit module de génération d'énergie (3), et comportant des moyens d'interface (20) conçus pour le fonctionnement dudit système d'alimentation auxiliaire (1) dudit ensemble en combinaison avec ledit module de génération d'énergie (3), les moyens d'interface (20) comportant des moyens de sécurité (24, 25) montés en parallèle dudit système d'alimentation auxiliaire (1).

## Patentansprüche

1. Aufbau, umfassend ein Hilfsstromversorgungssystem (1) und eine Schnittstellenvorrichtung (2) zwischen dem Hilfsstromversorgungssystem (1) und einem Energiegewinnungsmodul (3) bei einem Schienenfahrzeug, wobei das Energiegewinnungsmodul (3) dafür ausgelegt ist, ein Hilfsstromversorgungssystem, das gemäß einer anderen Technologie als das Hilfsstromversorgungssystem (1) verwendet wird, mit elektrischer Energie aufzuladen, wobei der Aufbau **dadurch gekennzeichnet ist, dass** die Schnittstellenvorrichtung (2) Verbindungsmittel zu dem Energiegewinnungsmodul (3) und dem Hilfsstromversorgungssystem (1) enthält und dass die Schnittstellenvorrichtung (2) Schnittstellenmittel (20) enthält, die für den Betrieb des Hilfsstromversorgungssystems (1) in Kombination mit dem Energiegewinnungsmodul (3) ausgelegt sind, wobei die Schnittstellenmittel (20) Sicherungsmittel (24, 25) enthalten, die zu dem Hilfsstromversorgungssystem (1) parallelgeschaltet sind.

2. Aufbau nach Anspruch 1, **dadurch gekennzeichnet, dass** das Energiegewinnungsmodul (3) für die Energielieferung konzipierte Auflademittel enthält, wobei die Schnittstellenmittel (20) Übertragungsmittel (21) zur Übertragung der von den Auflademitteln des Energiegewinnungsmoduls (3) gelieferten elektrischen Energie zu dem Hilfsstromversorgungssystem (1) enthalten.

3. Aufbau nach einem der Ansprüche 1 oder 2, **dadurch gekennzeichnet, dass** die Schnittstellenmittel (20) darüber hinaus Mittel zur Übertragung von elektrischer Energie (22) aus dem Hilfsstromversorgungssystem (1) zu dem Energiegewinnungsmodul (3) enthalten.

4. Aufbau nach einem der Ansprüche 1 bis 3, **dadurch gekennzeichnet, dass** die Schnittstellenmittel (20) Energiespeichermittel (23) enthalten.

5. Aufbau nach einem der Ansprüche 1 bis 4, **dadurch gekennzeichnet, dass** es sich bei dem Hilfsstromversorgungssystem (1) um eine Lithium-Eisen-Phosphat-Batterie handelt.

6. Schienenfahrzeug, umfassend einen Aufbau nach einem der Ansprüche 1 bis 5.

7. Betriebsinstandhaltungsverfahren bei einem Schienenfahrzeug, wobei das Schienenfahrzeug ein Hilfsstromversorgungssystem, das gemäß einer ersten Technologie verwendet wird, und ein Energiegewinnungsmodul (3) enthält, wobei das Energiegewinnungsmodul (3) dafür ausgelegt ist, das Hilfsstromversorgungssystem mit elektrischer Energie aufzuladen, wobei das Betriebsinstandhaltungsverfahren **dadurch gekennzeichnet ist, dass** es das Ersetzen des Hilfsstromversorgungssystems durch einen Aufbau umfasst, welcher aus einem Hilfsstromversorgungssystem (1), das gemäß einer zweiten Technologie, die sich von der ersten Technologie unterscheidet, verwendet wird, und aus einer Schnittstellenvorrichtung (2) gebildet ist, wobei die Schnittstellenvorrichtung (2) zwischen dem Hilfsstromversorgungssystem (1) des Aufbaus und dem Energiegewinnungsmodul (3) angeordnet ist und Schnittstellenmittel (20) enthält, die für den Betrieb des Hilfsstromversorgungssystems (1) des Aufbaus in Kombination mit dem Energiegewinnungsmodul (3) ausgelegt sind, wobei die Schnittstellenmittel (20) Sicherungsmittel (24, 25) enthalten, die zu dem Hilfsstromversorgungssystem (1) parallelgeschaltet sind.

## Claims

1. Group comprising an auxiliary power supply system (1) and an interface device (2) for forming an interface between said auxiliary power supply system (1) and a power generation module (3) in a rail vehicle, said power generation module (3) having been designed to charge with electrical energy an auxiliary power supply system implemented according to a technology different from that one of the auxiliary power supply system (1) of said group, said group being **characterized in that** said interface device (2) comprises means for connecting to said power generation module (3) and to said auxiliary power supply system (1), and **in that** the interface device (2) comprises interface means (20) designed for the operation of said auxiliary power supply system (1) in combination with said power generation module (3), the interface means (20) comprising safety means (24, 25) mounted in parallel with said other type of auxiliary power supply system (1).

2. Group according to claim 1, **characterized in that** , the power generation module (3) comprising charging means designed to deliver energy, said interface means (20) comprise means for transferring electrical energy (21) delivered by the charging means of said power generation module (3) to said auxiliary power supply system (1).

3. Group according to one of claims 1 or 2, **characterized in that** said interface means (20) further comprise means for transferring electrical energy (22) coming from said auxiliary power supply system (1) to the power generation module (3).

4. Group according to one of claims 1 to 3, **characterized in that** the interface means (20) comprise energy storage means (23).

5. Group according to one of claims 1 to 4, **characterized in that** said auxiliary power supply system (1) is a battery of Lithium Iron Phosphate type.

6. A rail vehicle comprising an interface device in accordance with one of claims 1 to 5.

7. Method for maintaining a rail vehicle, the rail vehicle comprising an auxiliary power supply system implemented according to a first technology and a power generation module (3), said power generation module (3) being designed to charge with electrical energy said auxiliary power supply system, said maintenance method being **characterized in that** it comprising replacing said auxiliary power supply system by a group formed by an auxiliary power supply system (1) implemented according to a second technology different from the first technology and an interface device (2), said interface device (2) for forming an interface between said auxiliary power supply system (1) of said group and said power generation module (3), and comprising the interface means (20) designed for the operation of said auxiliary power supply system (1) in combination with said power generation module (3), the interface means (20) comprising safety means (24, 25) mounted in parallel with said other type of auxiliary power supply system (1).
